(19) Europäisches Patentamt European Patent Office Office européen des brevets

(11) **EP 3 082 062 B1**

(12) **EUROPEAN PATENT SPECIFICATION**

(45) Date of publication and mention
of the grant of the patent:
**21.06.2017 Bulletin 2017/25**

(51) Int Cl.:
***G06K 7/10*** (2006.01)

(21) Application number: **16170620.5**

(22) Date of filing: **20.08.2012**

(54) **OPTICAL INDICIA READING TERMINAL WITH COLOR IMAGE SENSOR**

OPTISCHES CODELESEGERÄT MIT EINEM FARBBILDSENSOR

LECTEUR DE CODE OPTIQUE AVEC UN CAPTEUR D'IMAGES EN COULEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2011 US 201113217139**

(43) Date of publication of application:
**19.10.2016 Bulletin 2016/42**

(62) Document number(s) of the earlier application(s) in
accordance with Art. 76 EPC:
**12181104.6 / 2 562 680**

(73) Proprietor: **Metrologic Instruments, Inc.
Blackwood, NJ 08012 (US)**

(72) Inventor: **LIU, Yong
Morris Plains
NJ 07950 (US)**

(74) Representative: **Houghton, Mark Phillip
Patent Outsourcing Limited
1 King Street
Bakewell, Derbyshire DE45 1DZ (GB)**

(56) References cited:
**EP-A1- 2 284 765**

## Description

FIELD OF THE INVENTION

The present invention relates to indicia reading terminals in general and in particular to an optical based indicia reading terminal.

BACKGROUND OF THE INVENTION

Indicia reading terminals are available in multiple varieties. The well known gun style reader as commonly seen at retail store checkout counters is typically available in a form devoid of a keyboard and display. Enhanced functioning indicia reading terminals having keyboards, displays, and advanced networking communication capabilities are also available. Typically, indicia reading terminals have triggers or buttons for activating decoding attempts. Some indicia reading terminals employ color image

EP 2 284 765 discloses an indicia reading terminal having an image sensor and variable lens assembly, providing settings with different planes of optimal focus.

SUMMARY OF THE INVENTION

There is provided an optical indicia reading terminal comprising a microprocessor, a memory, and an image sensor integrated circuit, all coupled to a system bus, and a hand held housing encapsulating the two-dimensional image sensor. The image sensor integrated circuit can comprise a two-dimensional image sensor including a plurality of pixels. The image sensor integrated circuit can be configured to read out a plurality of analog signals. Each analog signal of the plurality of analog signals can be representative of light incident on at least one pixel of the plurality of pixels. The image sensor integrated circuit can be further configured to derive a plurality of luminance signals from the plurality of analog signals, each luminance signal being representative of the luminance of light incident on at least one pixel of the plurality of pixels. The image sensor integrated circuit can be further configured to store a frame of image data in the terminal's memory by converting the plurality of luminance signals to a plurality of digital values, each digital value being representative of the luminance of light incident on at least one pixel of the plurality of pixels. The optical indicia reading terminal can be configured to process the frame of image data for decoding decodable indicia.

BRIEF DESCRIPTION OF THE DRAWINGS

The features described herein can be better understood with reference to the drawings described below. The drawings are not necessarily to scale, emphasis instead generally being placed upon illustrating the principles of the invention. In the drawings, like numerals are used to indicate like parts throughout the various views.

Fig. 1 schematically illustrates one embodiment of an optical indicia reading terminal;

Fig. 2 illustrates a block diagram of one embodiment of the optical indicia reading terminal;

Figs. 3a-3c illustrate the functioning of several embodiments of an image data extracting module;

Fig. 4 is an exploded perspective view of an imaging module carrying a subset of circuits as shown in Fig. 2;

Fig. 5 is an assembled perspective view of the imaging module as shown in Fig. 7;

Fig. 6 is a perspective view of a hand held indicia reading terminal incorporating an imaging module as shown in Figs. 4 and 5.

DETAILED DESCRIPTION OF THE INVENTION

In one embodiment, there is provided an optical indicia reading terminal equipped with a two-dimensional color image sensor. Using color image sensor for reading optical indicia can be advantageous due to the fact that a color image sensor can also be used for other functions performed by an optical indicia reading terminal (*e.g.*, still image or video capturing).

The associated image sensor circuitry can be configured to read out analog signals representative of light incident on image sensor pixels, to derive luminance signals from the read-out analog signals, and then to store a frame of monochrome image data in the terminal's memory by converting the luminance signals to digital values. The optical indicia reading terminal can be configured to process the frame of image data for decoding decodable indicia.

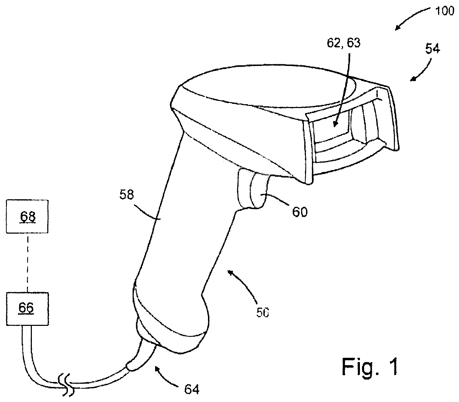

In an illustrative embodiment, shown in Fig. 1, there is provided an EIR terminal 100 including a housing 52 comprising a head portion 54 and a handle portion 56, the latter further comprising a hand grip 58 and a trigger 60. The trigger 60 can be used to initiate signals for activating frame readout and/or certain decoding processes. Other components of EIR terminal 100 can be disposed within the housing 52. For example, an image sensor 62 can be disposed in the head portion 54 behind a housing window 63. The image sensor 62 can be configured to output an electrical signal representative of light incident on the image sensor.

EIR terminal 100 can further comprise an I/O interface which in the illustrative embodiment of Fig. 1 can be communicatively coupled to a wired connection 66. The I/O interface can be used to communicatively couple EIR terminal 100 to a companion device 68 such as a register and/or peripheral data capture devices in a point-of-sale (POS) application. Other configurations of the I/O interface may utilize wireless communication technology and/or contact-type features that do not require wires and/or wired connection 66. In certain applications of EIR terminal 100 for example, the companion device 68 may be provided by a docking station with corresponding mating contacts and/or connectors that are useful to exchange power and data, including image data captured by the imaging module 62.

Although not incorporated in the illustrative embodiment of Fig. 1, EIR 100 can also comprise a number of peripheral devices, including a display for displaying such information as image frames captured by the terminal, a keyboard, and a pointing device.

EIR terminal 100 can be used, for example, for bar code reading and decoding in POS and other applications. A skilled artisan would appreciate the fact that other uses of EIR terminal 100 are within the scope of this disclosure.

While Fig. 1 illustrates a hand held housing, a skilled artisan would appreciate the fact that other types and form factors of terminal housings are within the scope of this disclosure.

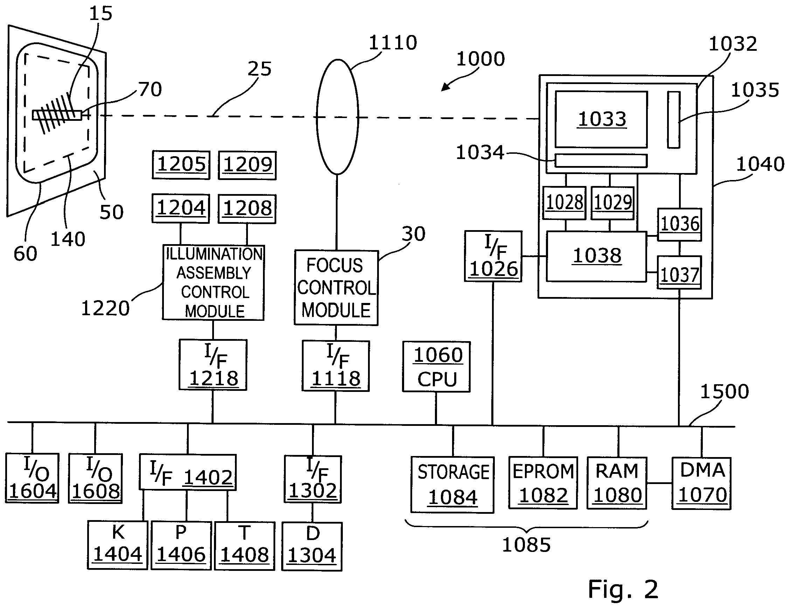

Fig. 2 illustrates a block diagram of one embodiment of the optical indicia reading terminal. Indicia reading terminal 100 can include a color image sensor 1032 comprising a multiple pixel image sensor array 1033 having pixels arranged in rows and columns, associated column circuitry 1034, and row circuitry 1035. In one embodiment, the image sensor array 1033 can be provided by a charge-coupled device (CCD) image sensor. In another embodiment, the image sensor array can be provided by a complementary metal-oxide semiconductor (CMOS) image sensor. A skilled artisan would appreciate the fact that other types of image sensors are within the scope of the invention.

Associated with the image sensor 1032 can be amplifier circuitry 1036, and an analog to digital converter 1037 which converts image information in the form of analog signals read out of image sensor 1033 into image information in the form of digital signals. Image sensor 1032 can also have an associated timing and control circuit 1038 for use in controlling *e.g.*, the exposure period of image sensor 1032, and gain applied to the amplifier circuitry 1036. The noted circuit components 1032, 1036, 1037, and 1038 can be packaged into a common image sensor integrated circuit 1040.

In operation, the light falling on the surface of image sensor 1032 can cause accumulation of charge in each pixel. The indicia reading terminal 100 can be configured to read out analog signals representative of light incident on one or more pixels.

In one embodiment, image sensor integrated circuit 1040 can be configured to derive luminance signals from the read-out analog signals, and then to store a frame of monochrome image data in the terminal's memory by converting the luminance signals to digital values, so that terminal 100 can process the frame of image data for decoding decodable indicia. In one embodiment, image sensor integrated circuit 1040 can include an image data extracting module 1028 configured to derive luminance signals from the read-out analog signals. In another embodiment, the designation of image data extracting module can be purely functional, and the column circuitry 1034 and row circuitry 1035 can be configured to control deriving luminance signals from the read-out analog signals. In a yet another embodiment, deriving luminance signals from the read-out analog signals can be controlled by other components of image sensor integrated circuit 1040.

The analog signals can then be fed to the input of the ADC 1037. The resulting digital values representative of the analog signals can be stored in a system memory such as RAM 1080. Image frame data stored in RAM 1080 can be in the form of multibit pixel values, with each multibit pixel value representing light incident on a pixel of image sensor 1033. A memory 1085 of terminal 100 can include RAM 1080, a nonvolatile memory such as EPROM 1082 and a storage memory device 1084 such as may be provided by a flash memory or a hard drive memory.

In one embodiment, image sensor 1032 can be configured to output image data in YUV, YbCrCb or similar format supporting independent luminance and chrominance information. In YUV model, the Y component determines the brightness of the color (referred to as luminance or luma), while the U and V components determine the color itself (the chroma). U and V components are "color difference" signals of blue minus luma (B-Y) and red minus luma (R-Y). Value of Y component can range from 0 to 1 (or 0 to 255 in digital formats), while values of U and V components can range from -0.5 to 0.5 (or -128 to 127 in signed digital form, or 0 to 255 in unsigned form). Some YUV-based standards can further limit the ranges so the out-of-bounds values can indicate special information like synchronization.

YUV color representation can be computed from RGB color representation as follows:

$$Y = 0.299R + 0.587G + 0.114B$$

$$U = -0.147R - 0.289G + 0.436B$$

$$V = 0.615R - 0.515G - 0.100B$$

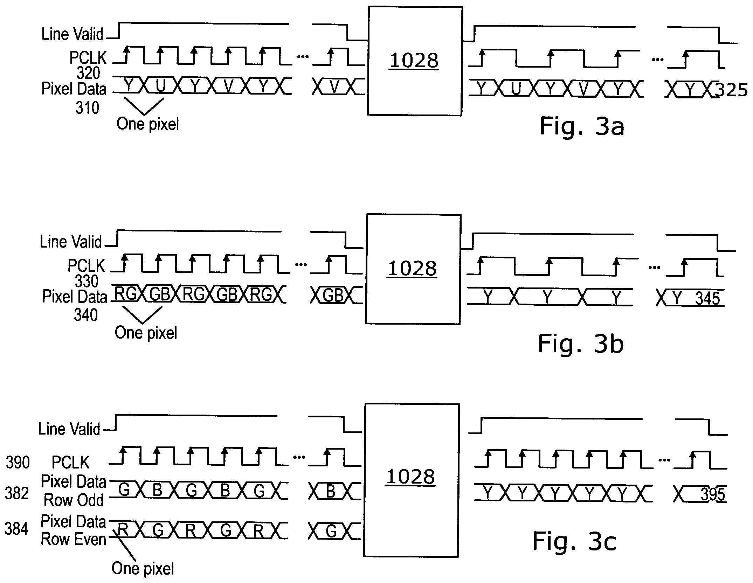

Pixel data 310 can include Y component and one of U, V components as shown in Fig. 3a. The rate of pixel clock 320 can be twice the pixel rate. Image data extracting module 1028 can extract Y component by reading out output signals at every second pixel clock rate (plot 325 in Fig. 3a), thus reducing the image data acquisition bandwidth requirement.

In another embodiment, image sensor 1032 can be configured to output image data in an RGB format (*e.g.*, RGB555, RGB565 or similar format). All three R, G, B components are available for each pixel 340, as shown in Fig. 3b. Thus, the rate of pixel clock 330 can be twice the pixel rate. Image data extracting module 1028 can extract Y component 345 by interpolating the R, G, B data 340, performing color correction, white balancing and/or color to monochrome conversion.

In another embodiment, image sensor 1032 can be configured to output image data in the raw RGB format. The pixel data can comprise pixel data for odd rows 382 and pixel data for even rows 384, as shown in Fig. 3c. Either R, G, or B component is present in each sampling, and only one of the three components is available for each pixel. Thus, the rate of pixel clock 390 is equal to the pixel rate. Image data extracting module 1028 can extract Y component 395 by interpolating the R, G, B data 382-384, performing color correction, white balancing and/or color to monochrome conversion.

In one embodiment, indicia reading terminal 100 can be configured to bypass the image data extracting module 1028 and thus acquire a color image.

Referring again to Fig. 2, indicia reading terminal 100 can include microprocessor 1060 which can be adapted to read out image data stored in memory 1080 and subject such image data to various image processing algorithms.

In one embodiment, image sensor integrated circuit 1040 can be configured to read-out analog signals, and then to store a frame of color image data in the terminal's memory by converting the analog signals to digital values. Microprocessor 1060 can be configured to convert the frame of color image data to a frame of monochrome image data.

In one embodiment, image sensor integrated circuit 1040 can be configured to output color image data in YUV, YbCrCb or similar format supporting independent luminance and chrominance information. Microprocessor 1060 can be configured to only extract Y component from the stored frame of color image data and to store the resulting monochrome frame of image data in the terminal's memory.

In another embodiment, image sensor 1032 can be configured to output image data in an RGB format (*e.g.*, RGB555, RGB565 or similar format). All three R, G, B components are available for each pixel 340, as shown in Fig. 3b. Microprocessor 1060 can be configured to convert the stored frame of color image data into a monochrome frame of image data (*e.g.,* by interpolating the R, G, B data, performing color correction, and/or white balancing) and to store the resulting monochrome frame of image data in the terminal's memory.

In another embodiment, image sensor 1032 can be configured to output image data in the raw RGB format. The pixel data can comprise pixel data for odd rows 382 and pixel data for even rows 384, as shown in Fig 3c. Either R, G, or B component is present in each sampling, and only one of the three components is available for each pixel. Microprocessor 1060 can be configured to convert the stored frame of color image data into a monochrome frame of image data (*e.g.,* by interpolating the R, G, B data, performing color correction, and/or white balancing) and to store the resulting monochrome frame of image data in the terminal's memory.

Referring again to Fig. 2, indicia reading terminal 100 can include a direct memory access unit (DMA) 1070 for routing image information read out from image sensor 1032 that has been subject to conversion and storage to RAM 1080. In another embodiment, terminal 100 can employ a system bus providing for bus arbitration mechanism (*e.g.*, a PCI bus) thus eliminating the need for a central DMA controller. Other embodiments of the system bus architecture and/or direct memory access components providing for efficient data transfer between the image sensor 1032 and RAM 1080 can be provided.

In another aspect, the indicia reading terminal 100 can include microprocessor 1060 which can be adapted to read out image data stored in memory 1080 and subject such image data to various image processing algorithms.

In another aspect, the indicia reading terminal 100 can include a variable focus imaging lens 1110 for use in focusing an image of a decodable indicia located within a field of view 140 on a substrate 50 onto image sensor 1033. Imaging light rays can be transmitted about imaging axis 25. Variable focus imaging lens 1110 can be adapted to be capable of multiple best focus distances and multiple focal lengths. Variable focus imaging lens 1110 can be operative to provide a new best focus distance and/or focal length within a fraction of a frame time in response to an applied input control signal being applied to the variable focus imaging lens 1110. In one embodiment, the variable focus imaging lens 1110 can be provided by a deformable imaging lens, *e.g.,* a deformable fluid lens or gel lens. In another embodiment, the variable focus imaging lens 1110 can be provided by a non-deformable fluid lens, *e.g.,* an electrowetting liquid lens wherein the surface tension of one or more volumes of lens liquid changes in response to a signal being applied to the lens, or a liquid crystal type lens wherein indices of refraction of one or more volumes of lens fluid change in response to a signal being applied to the lens.

The indicia reading terminal 100 can also include an illumination pattern light source bank 1204 for use in generating an illumination pattern 60 substantially corresponding to a field of view 140 of terminal 100 and an aiming pattern light source bank 1208 for use in generating an aiming pattern 70 on substrate 50. Shaping optics 1205 and 1209 can be provided for shaping light from bank 1204 and bank 1208 into pattern 60 and into pattern 70 respectively. In use, terminal 100 can be oriented by an operator with respect to a substrate 50 bearing decodable indicia 15 in such manner that aiming pattern 70 is projected on a decodable indicia 15. In the example of Fig. 2, decodable indicia 15 is provided by a 1D bar code symbol. Decodable indicia could also be provided by 2D bar code symbols or optical character recognition (OCR) characters.

Each of illumination pattern light source bank 1204 and aiming pattern light source bank 1208 can include one or more light sources. Variable focus imaging lens 1110 can be controlled with use of focus control module 30 and the illumination assembly comprising illumination pattern light source bank 1204 and aiming pattern light source bank 1208 can be controlled with use of illumination assembly control module 1220. Focus control module 30 can send signals to variable focus imaging lens 1110 *e.g.,* for changing a best focus distance and/or a focal length of variable focus imaging lens 1110. Illumination assembly control module 1220 can send signals to illumination pattern light source bank 1204 *e.g.,* for changing a level of illumination output by illumination pattern light source bank 1204.

In one example, the indicia reading terminal 100 can be adapted so that illumination assembly control module 1220 controls light source bank 1204 to have a relatively lower level of illumination output when the best focus distance of imaging lens 1110 is set to a first shorter best focus distance, and a relatively higher level of illumination output when the best focus distance of imaging lens 1110 is set at a longer best focus distance. Such variable illumination settings can be varied within a time that trigger signal 502 remains active. The variable illumination level settings can be synchronized to the certain lens settings set forth in connection with the various configurations described herein *infra*.

Indicia reading terminal 100 can also include a number of peripheral devices, *e.g.*, a display 1304 for displaying such information as captured image frames, keyboard 1404, pointing device 1406, and trigger 1408 which may be used to make active a trigger signal 502 for activating frame readout and/or certain decoding processes. The indicia reading terminal 100 can be adapted so that activation of trigger 1408 activates trigger signal 502 and initiates a decode attempt.

Indicia reading terminal 100 can also include various interface circuits for coupling the peripheral devices to system address/data bus (system bus) 1500, for communication with microprocessor 1060 which can also be coupled to system bus 1500. The indicia reading terminal 100 can include circuit 1026 for coupling image sensor timing and control circuit 1038 to system bus 1500, interface circuit 1118 for coupling focus control module 30 to system bus 1500, interface circuit 1218 for coupling illumination control assembly 1220 to system bus 1500, interface circuit 1302 for coupling display 1304 to system bus 1500, and interface circuit 1402 for coupling keyboard 1404, pointing device 1406, and trigger 1408 to system bus 1500.

In a further aspect, indicia reading terminal 100 can include one or more I/O interfaces 1604, 1608 for providing communications with external devices (*e.g.,* a cash register server, a store server, an inventory facility server, a peer terminal 100, a local area network base station, or a cellular base station). I/O interfaces 1604, 1608 can be interfaces of any combination of known computer interfaces, *e.g.*, Ethernet (IEEE 802.3), USB, IEEE 802.11, Bluetooth, CDMA, GSM.

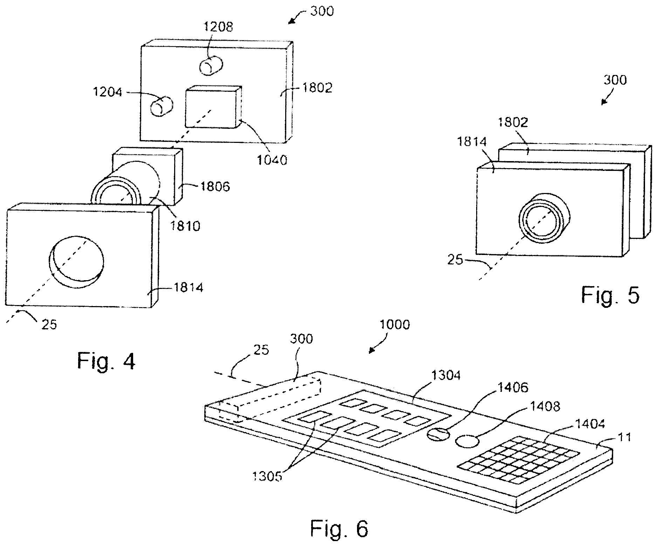

Referring now to Figs. 4 and 5, an imaging module 300 for supporting components of terminal 100 can include image sensor integrated circuit 1040 disposed on a printed circuit board 1802 together with illumination pattern light source bank 1204 and aiming pattern light source bank 1208 each shown as being provided by a single light source. Imaging module 300 can also include containment 1806 for image sensor integrated circuit 1040, and housing 1810 for housing imaging lens 1110. Imaging module 300 can also include optical plate 1814 having optics for shaping light from bank 1204 and bank 1208 into predetermined patterns. Imaging module 300 can be disposed in a hand held housing 11, an example of which is shown in Fig. 6. Disposed on hand held housing 11 can be display 1304, trigger 1408, pointing device 1406, and keyboard 1404.

The invention is defined by the appended claims.

## Claims

1. An optical indicia reading terminal (100) comprising:

   a microprocessor (1060) coupled to a system bus (1500);
   a memory (1080) communicatively coupled to said system bus (1500);
   an image sensor (62) integrated circuit (1040) comprising a two-dimensional image sensor (1032) including a plurality of pixels (1033) and an image data extracting module, wherein said image sensor integrated circuit is coupled to said system bus and communicates with said microprocessor (1060);
   wherein said image sensor integrated circuit (1040) is configured to read out a plurality of analog signals, each analog signal of said plurality of analog signals being representative of light incident on at least one pixel of said plurality of pixels;
   wherein said optical indicia reading terminal (100) is configured to process a frame of image data for decoding decodable indicia; and
   an illumination assembly control module (1220) in communication with said microprocessor via said system bus, said illumination assembly control module controlling a light source bank (1204) and aiming pattern light source bank (1208), and a variable focus imaging lens (1110) controlled by focus control module (30) to utilize a relatively lower level of illumination output for shorter focus distances and a relatively higher level of illumination output for longer focus distances.

2. The optical indicia reading terminal of claim 1 further comprising an imaging lens (1110) configured to focus an image of a target decodable indicia onto said two-dimensional image sensor.

3. The optical indicia reading terminal of claim 1, wherein said image sensor integrated circuit (1040) is configured to read out a plurality of RGB analog signals.

4. The optical indicia reading terminal of claim 1, wherein said image sensor integrated circuit (1040) is configured to read out a plurality of YUV analog signals.

5. The optical indicia reading terminal of claim 1, wherein said frame of image data is a monochrome frame.

6. The optical indicia reading terminal of claim 1 further including at least one of: a display (1044), a keyboard, and a communication interface.

7. The optical indicia reading terminal of claim 1 further including a trigger (1408) for activating readout of said plurality of analog signals.

8. The optical indicia reading terminal of claim 1, wherein said image sensor integrated circuit (1040) further comprises at least one of: an amplifier, an analog-to-digital converter, and a control circuit.

9. The optical indicia reading terminal of claim 1, wherein said image sensor (1032) comprises a multiple pixel image sensor array (1033) having pixels arranged in rows and columns, a column circuitry, and a row circuitry.

10. The optical indicia reading terminal of claim 1, wherein said image sensor (1032) comprises a multiple pixel image sensor array having pixels arranged in rows and columns, said image sensor array provided by a charge-coupled device (CCD) image sensor.

11. The optical indicia reading terminal of claim 1, wherein said image sensor (1032) comprises a multiple pixel image sensor array having pixels arranged in rows and columns, said image sensor array provided by a complementary metal-oxide semiconductor (CMOS) image sensor.

12. The optical reading terminal of claim 1, wherein said image sensor integrated circuit (1040) is further configured to derive a plurality of luminance signals from said plurality of analog signals, each luminance signal of said plurality of luminance signals being representative of a luminance of light incident on at least one pixel of said plurality of pixels; wherein said image sensor integrated circuit (1040) reads out said luminance signals as independent luminance information extracted by said image data extracting module; wherein said microprocessor (1060) synchronizes said independent luminance information with said focus distance.

13. The optical reading terminal of claim 12, wherein reading independent luminance information is activated via a trigger signal (502) and synchronized by said microprocessor in communication with an image sensor timing and control circuit.

14. The optical reading terminal claim 12, wherein reading independent luminance information is activated via a trigger signal (502) and synchronized by said microprocessor (1060) in communication with said focus control module.

**Patentansprüche**

1. Endgerät (100) zum Lesen von optischen Zeichen, das Folgendes umfasst:

einen Mikroprozessor (1060), der mit einem Systembus (1500) gekoppelt ist; einen Speicher (1080), der mit dem Systembus (1500) kommunikativ gekoppelt ist; eine integrierte Schaltung (1040) eines Bildsensors (62) mit einem zweidimensionalen Bildsensor (1032) mit mehreren Pixeln (1033) und einem Bilddatenextraktionsmodul, wobei die integrierte Schaltung des Bildsensors mit dem Systembus gekoppelt ist und mit dem Mikroprozessor (1060) kommuniziert; wobei die integrierte Schaltung (1040) des Bildsensors dazu konfiguriert ist, mehrere analoge Signale auszulesen, wobei jedes analoge Signal der mehreren analogen Signale Licht darstellt, das auf mindestens ein Pixel der mehreren Pixel einfällt; wobei das Endgerät (100) zum Lesen von optischen Zeichen dazu konfiguriert ist, einen Rahmen von Bilddaten zum Decodieren von decodierbaren Zeichen zu verarbeiten; und ein Beleuchtungsanordnungs-Steuermodul (1220) in Kommunikation mit dem Mikroprozessor über den Systembus, wobei das Beleuchtungsanordnungs-Steuermodul eine Lichtquellengruppe (1204) und eine Zielmusterlichtquellengruppe (1208) steuert, und einer Abbildungslinse (1110) mit variablem Brennpunkt, die durch ein Brennpunktsteuermodul (30) gesteuert wird, um einen relativ niedrigeren Pegel einer Beleuchtungsausgabe für kürzere Brennweiten und einen relativ höheren Pegel einer Beleuchtungsausgabe für längere Brennweiten zu verwenden.

2. Endgerät zum Lesen von optischen Zeichen nach Anspruch 1, das ferner eine Abbildungslinse (1110) umfasst, die dazu konfiguriert ist, ein Bild von decodierbaren Zielzeichen auf den zweidimensionalen Bildsensor zu fokussieren.

3. Endgerät zum Lesen von optischen Zeichen nach Anspruch 1, wobei die integrierte Schaltung (1040) des Bildsensors dazu konfiguriert ist, mehrere analoge RGB-Signale auszulesen.

4. Endgerät zum Lesen von optischen Zeichen nach Anspruch 1, wobei die integrierte Schaltung (1040) des Bildsensors dazu konfiguriert ist, mehrere analoge YUV-Signale auszulesen.

5. Endgerät zum Lesen von optischen Zeichen nach Anspruch 1, wobei der Rahmen von Bilddaten ein monochromer Rahmen ist.

6. Endgerät zum Lesen von optischen Zeichen nach Anspruch 1, das ferner eine Anzeige (1044), eine Tastatur und/oder eine Kommunikationsschnittstelle umfasst.

7. Endgerät zum Lesen von optischen Zeichen nach Anspruch 1, das ferner einen Auslöser (1408) zum Aktivieren des Auslesens der mehreren analogen Signale umfasst.

8. Endgerät zum Lesen von optischen Zeichen nach Anspruch 1, wobei die integrierte Schaltung (1040) des Bildsensors ferner einen Verstärker, einen Analog-Digital-Umsetzer und/oder eine Steuerschaltung umfasst.

9. Endgerät zum Lesen von optischen Zeichen nach Anspruch 1, wobei der Bildsensor (1032) eine Mehrpixel-Bildsensormatrix (1033) mit Pixeln, die in Zeilen und Spalten angeordnet sind, eine Spalten-Schaltungsanordnung und eine Zeilen-Schaltungsanordnung umfasst.

10. Endgerät zum Lesen von optischen Zeichen nach Anspruch 1, wobei der Farbbildsensor (1032) eine Mehrpixel-Bildsensormatrix mit Pixeln, die in Zeilen und Spalten angeordnet sind, umfasst, wobei die Bildsensormatrix durch einen Bildsensor einer ladungsgekoppelten Vorrichtung (CCD) bereitgestellt ist.

11. Endgerät zum Lesen von optischen Zeichen nach Anspruch 1, wobei der Bildsensor (1032) eine Mehrpixel-Bildsensormatrix mit Pixeln, die in Zeilen und Spalten angeordnet sind, umfasst, wobei die Bildsensormatrix durch einen Bildsensor mit komplementärem Metalloxid-Halbleiter (CMOS) vorgesehen ist.

12. Optisches Leseendgerät nach Anspruch 1, wobei die integrierte Schaltung (1040) des Bildsensors ferner dazu konfiguriert ist, mehrere Luminanzsignale von den mehreren analogen Signalen abzuleiten, wobei jedes Luminanzsignal der mehreren Luminanzsignale eine Luminanz von Licht darstellt, das auf mindestens ein Pixel der mehreren Pixel einfällt;
wobei die integrierte Schaltung (1040) des Bildsensors die Luminanzsignale als unabhängige Luminanz-Informationen ausliest, die durch das Bilddatenextraktionsmodul extrahiert werden;
wobei der Mikroprozessor (1060) die unabhängigen Luminanz-Informationen mit der Brennweite synchronisiert.

13. Optisches Leseendgerät nach Anspruch 12, wobei das Lesen der unabhängigen Luminanz-Informationen über ein Auslösesignal (502) aktiviert wird und durch den Mikroprozessor in Kommunikation mit einer Bildsensor-Zeitablauf- und Steuerschaltung synchronisiert wird.

14. Optisches Leseendgerät nach Anspruch 12, wobei das Lesen der unabhängigen Luminanz-Informationen über ein Auslösesignal (502) aktiviert wird und durch den Mikroprozessor (1060) in Kommunikation mit dem Brennpunktsteuermodul synchronisiert wird.

**Revendications**

1. Terminal de lecture d'indice optique (100) comprenant :

- un microprocesseur (1060) couplé à un bus système (1500) ;
- une mémoire (1080) couplée en communication au bus système (1500) ;
- un circuit intégré (1040) de capteur d'image (62) comprenant un capteur d'image bidimensionnel (1032) comportant plusieurs pixels (1033) et un module d'extraction de données d'image, le circuit intégré de capteur d'image étant couplé au bus système et communiquant avec le microprocesseur (1060) ;
- dans lequel le circuit intégré (1040) de capteur d'image est conçu pour lire une pluralité de signaux analogiques, chaque signal analogique dans la pluralité de signaux analogiques représentant une lumière incidente sur au moins un pixel de ladite pluralité de pixels ;

- dans lequel le terminal de lecture d'indice optique (100) est conçu pour traiter une trame des données d'image afin de décoder un indice décodable ; et

- un module de commande d'ensemble d'éclairage (1220) en communication avec le microprocesseur via le bus système, lequel module de commande d'ensemble d'éclairage commande une banque de source de lumière (1204) et une banque de source de lumière de motif de visée (1208), et une lentille d'imagerie à focale variable (1110) commandée par un module de commande de focale (30) afin d'utiliser un niveau relativement plus faible d'entrée d'éclairage pour des distances focales plus courtes et un niveau relativement plus élevé de sortie d'éclairage pour des distances focales plus longues.

2. Terminal de lecture d'indice optique selon la revendication 1, comprenant en outre une lentille d'imagerie (1110) conçue pour focaliser une image d'un indice décodable cible sur le capteur d'image bidimensionnel.

3. Terminal de lecture d'indice optique selon la revendication 1, dans lequel le circuit intégré (1040) de capteur d'image est conçu pour lire plusieurs signaux analogiques RVB.

4. Terminal de lecture d'indice optique selon la revendication 1, dans lequel le circuit intégré (1040) de capteur d'image est conçu pour lire plusieurs signaux analogiques YUV.

5. Terminal de lecture d'indice optique selon la revendication 1, dans lequel la trame de données d'image est une trame monochrome.

6. Terminal de lecture d'indice optique selon la revendication 1, comprenant en outre l'un au moins d'un affichage (1044), d'un clavier et d'une interface de communication.

7. Terminal de lecture d'indice optique selon la revendication 1, comprenant en outre un déclencheur (1408) pour activer la lecture desdits plusieurs signaux analogiques.

8. Terminal de lecture d'indice optique selon la revendication 1, dans lequel le circuit intégré (1040) de capteur d'image comprend en outre l'un au moins d'un amplificateur, d'un convertisseur analogique-numérique et d'un circuit de commande.

9. Terminal de lecture d'indice optique selon la revendication 1, dans lequel le capteur d'image (1032) comprend un réseau de capteurs d'image de pixels multiples (1033) comprenant des pixels disposés en rangées et en colonnes, un circuit de colonne et un circuit de rangées.

10. Terminal de lecture d'indice optique selon la revendication 1, dans lequel le capteur d'image couleur (1032) comprend un réseau de capteurs d'image de pixels multiples ayant des pixels disposés en rangées et en colonnes, lequel réseau de capteurs d'image est mis en oeuvre par un capteur d'image à dispositif à couplage de charge (CCD).

11. Terminal de lecture d'indice optique selon la revendication 1, dans lequel le capteur d'image (1032) comprend un réseau de capteurs d'image de pixels multiples ayant des pixels disposés en rangées et en colonnes, lequel réseau de capteurs d'image est mis en oeuvre par un capteur d'image à semi-conducteur à oxyde métallique complémentaire (CMOS).

12. Terminal de lecture optique selon la revendication 1, dans lequel le circuit intégré (1040) de capteur d'image est en outre conçu pour dériver une pluralité de signaux de luminance depuis la pluralité de signaux analogiques, chaque signal de luminance de la pluralité de signaux de luminance représentant une luminance d'une lumière incidente sur au moins un pixel de la pluralité de pixels ;
dans lequel le circuit intégré (1040) de capteur d'image lit les signaux de luminance comme des informations de luminance indépendantes extraites par le module d'extraction de données d'image ;
dans lequel le microprocesseur (1060) synchronise les informations de luminance indépendantes avec la distance focale.

13. Terminal de lecture optique selon la revendication 12, dans lequel les informations de luminance indépendantes sont activées via un signal de déclenchement (502) et synchronisées par le microprocesseur en communication avec un circuit de synchronisation et de commande de capteur d'image.

14. Terminal de lecture optique selon la revendication 12, dans lequel les informations de luminance indépendantes sont activées via un signal de déclenchement (502) et synchronisées par le microprocesseur (1060) en communication avec le module de commande de focale.

Fig. 1

Fig. 2

Line Valid

PCLK 320

Pixel Data 310

One pixel

1028

Fig. 3a

325

Line Valid

PCLK 330

Pixel Data 340

One pixel

1028

Fig. 3b

345

390   Line Valid

PCLK

382   Pixel Data Row Odd

384   Pixel Data Row Even

One pixel

1028

Fig. 3c

395

Fig. 5

Fig. 4

Fig. 6

**EP 3 082 062 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2284765 A